# EUROPÄISCHE PATENTSCHRIFT

(11) **EP 3 335 858 B1**
(45) Veröffentlichungstag und Bekanntmachung des Hinweises auf die Patenterteilung: **21.05.2025**
(21) Anmeldenummer: 17178987.8
(22) Anmeldetag: 30.06.2017
(51) Int. Cl.: B22F 10/28, B22F 10/43, B22F 10/47, B29C 64/40, B22F 12/49, B22F 12/67, B33Y 70/00

(54) **VERFAHREN ZUR ADDITIVEN HERSTELLUNG EINES DREIDIMENSIONALEN OBJEKTS**
METHOD FOR THE ADDITIVE PRODUCTION OF A THREE-DIMENSIONAL OBJECT
PROCÉDÉ DE FABRICATION ADDITIVE D'UN OBJET TRIDIMENSIONNEL

(30) Priorität: 14.12.2016 DE 102016124401
(43) Veröffentlichungstag der Anmeldung: 20.06.2018
(73) Patentinhaber: Concept Laser GmbH, 96215 Lichtenfels (DE)
(72) Erfinder: Hofmann, Matthias, 96215 Lichtenfels (DE)
(74) Vertreter: Hafner & Kohl PartmbB

(56) Entgegenhaltungen:
- DE-A1- 19 538 257
- FR-A1- 2 974 316
- JAMASP JHABVALA ET AL: "An innovative method to build support structures with a pulsed laser in the selective laser melting process", THE INTERNATIONAL JOURNAL OF ADVANCED MANUFACTURING TECHNOLOGY, SPRINGER, BERLIN, DE, vol. 59, no. 1 - 4, 7 July 2011 (2011-07-07), pages 137 - 142, XP035019490, ISSN: 1433-3015, DOI: 10.1007/S00170-011-3470-8
- RESCIC SILVIA ET AL: "The micro-sandblasting technique as a new tool for the evaluation of the state of conservation of natural stone and mortar surfaces", EUROPEAN JOURNAL OF ENVIRONMENTAL AND CIVIL ENGINEERING, vol. 17, no. 2, 20 February 2013 (2013-02-20), pages 113 - 127, XP055804215, ISSN: 1964-8189, DOI: 10.1080/19648189.2012.751227

## Beschreibung

Die Erfindung betrifft ein Verfahren zur additiven Herstellung eines dreidimensionalen Objekts durch sukzessive schichtweise selektive Belichtung und damit einhergehende sukzessive schichtweise selektive Verfestigung von Baumaterialschichten aus einem vermittels eines Energiestrahls verfestigbaren Baumaterial.

Entsprechende Verfahren zur additiven Herstellung dreidimensionaler Objekte sind dem Grunde nach bekannt. Ein bekanntes Beispiel für ein entsprechendes Verfahren ist ein selektives Laserschmelzverfahren, kurz SLM-Verfahren.

Im Rahmen der Durchführung entsprechender Verfahren ist es weiterhin bekannt, Stützstrukturen auszubilden. Entsprechende Stützstrukturen zeichnen sich durch eine Stützwirkung für jeweilige additiv herzustellende bzw. hergestellte dreidimensionale Objekte aus und umfassen typischerweise eine Vielzahl an strebenartigen bzw. -förmigen Stützelementen. Mithin werden jeweilige additiv herzustellende bzw. hergestellte dreidimensionale Objekte durch entsprechende Stützstrukturen gestützt. Entsprechende Stützstrukturen werden nach Fertigstellung des additiven Bauvorgangs typischerweise von dem jeweiligen additiv hergestellten dreidimensionalen Objekt entfernt.

Insbesondere bei der additiven Herstellung dreidimensionaler Objekte mit filigraner bzw. komplexer geometrisch-konstruktiver Gestalt ist es bisweilen schwierig, Stützstrukturen auszubilden, welche einerseits auch in schwer zugänglichen, z. B. hinterschnittenen, Bereichen eines jeweiligen dreidimensionalen Objekts eine ausreichende Stützwirkung aufweisen und sich andererseits ohne Beschädigung des jeweiligen dreidimensionalen Objekts entfernen lassen.

FR 2 974 316 A1 offenbart ein Prinzip zur Ausbildung einer Stützstruktur für ein additiv herzustellendes bzw. hergestelltes Objekt.

JAMASP JHABVALA ET AL: "An innovative method to build support structures with a pulsed laser in the selective laser melting process" (THE INTERNATIONAL JOURNAL OF ADVANCED MANUFACTURING TECHNOLOGY, SPRINGER, BERLIN, DE) beschreibt die Herstellung eines Teils aus Edelstahlpulver und einer Uhrenschließe aus Silberpulver und ein Herstellungsverfahren zur additiven Herstellung eines mittels Laserschmelzen, wobei eine Stützstruktur mit aufgebaut wird.

Der Erfindung liegt die Aufgabe zugrunde, ein, insbesondere im Hinblick auf die Realisierung einer demgegenüber verbesserten Stützstruktur, verbessertes Verfahren zur additiven Herstellung eines dreidimensionalen Objekts anzugeben.

Die Aufgabe wird durch ein Verfahren zur additiven Herstellung eines dreidimensionalen Objekts gemäß Anspruch 1 gelöst. Die hierzu abhängigen Ansprüche betreffen mögliche Ausführungsformen des Verfahrens.

Das hierin beschriebene Verfahren dient zur additiven Herstellung dreidimensionaler Objekte, d. h. beispielsweise technischer Bauteile bzw. technischer Bauteilgruppen, durch sukzessive schichtweise selektive Belichtung und damit einhergehende sukzessive schichtweise selektive Verfestigung von Baumaterialschichten aus einem verfestigbaren Baumaterial. Bei dem Baumaterial handelt es sich um ein pulverförmiges Metall-, Kunststoff- und/oder Keramikmaterial. Die sukzessive schichtweise selektive Belichtung bzw. Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Das Verfahren ist erfindungsgemäß als selektives Laserschmelzverfahren (SLM-Verfahren) oder als selektives Lasersinterverfahren (SLS-Verfahren) implementiert.

Verfahrensgemäß erfolgt im Rahmen der additiven Herstellung eines jeweiligen additiv herzustellenden dreidimensionalen Objekts - im Weiteren ist abgekürzt von "Objekt" die Rede - d. h. neben dem additiven Aufbau bzw. der additiven Ausbildung eines jeweiligen eigentlich herzustellenden Objekts auch ein additiver Aufbau bzw. eine additive Ausbildung einer Stützstruktur. Die Stützstruktur stützt ein jeweiliges Objekt zumindest abschnittsweise; die Stützstruktur übt damit eine zumindest abschnittsweise auf ein jeweiliges Objekt wirkende Stützwirkung aus.

Die verfahrensgemäß ausgebildete Stützstruktur umgibt ein jeweiliges Objekt, d. h. einzelne, mehrere oder sämtliche Objektabschnitte des jeweiligen Objekts, unmittelbar. Mit anderen Worten ist das jeweilige Objekt zumindest abschnittsweise, insbesondere vollständig, in die Stützstruktur eingebettet. Es besteht sonach zumindest abschnittsweise, insbesondere vollständig, ein unmittelbarer mechanischer Kontakt zwischen der Stützstruktur und dem jeweiligen zu stützenden bzw. gestützten Objekt.

Dabei ist es denkbar, dass die Stützstruktur das jeweilige Objekt zumindest abschnittsweise, z. B. mit mehreren zusammenhängenden oder mehreren nicht zusammenhängenden Stützstrukturabschnitten, umgibt oder die Stützstruktur das jeweilige Objekt, z. B. mit mehreren zusammenhängenden oder mehreren nicht zusammenhängenden Stützstrukturabschnitten, vollständig umgibt. Die Stützstruktur kann sonach mit mehreren zusammenhängenden oder mehreren nicht zusammenhängenden Stützstrukturabschnitten ausgebildet werden bzw. mehrere zusammenhängende oder mehrere nicht zusammenhängende Stützstrukturabschnitte umfassen. Entsprechende Stützstrukturabschnitte erstrecken sich dieses jeweils zumindest abschnittsweise umgebend jeweils zumindest abschnittsweise entlang des jeweiligen Objekts.

Wie erwähnt, erfolgt die Ausbildung der Stützstruktur im Rahmen der additiven Herstellung des jeweiligen Objekts. Die Stützstruktur wird verfahrensgemäß durch sukzessive schichtweise selektive Belichtung und damit einhergehende sukzessive schichtweise selektive Vorverfestigung von Baumaterialschichten aus dem vermittels des Energiestrahls verfestigbaren Baumaterial gebildet. Die sukzessive schichtweise selektive Belichtung bzw. Vorverfestigung jeweiliger selektiv zu verfestigender Baumaterialschichten erfolgt auf Grundlage stützstrukturbezogener Baudaten. Entsprechende Baudaten beschreiben die geometrisch-konstruktive Gestalt der jeweils additiv herzustellenden Stützstruktur und können beispielsweise "geslicte" CAD-Daten der additiv herzustellenden Stützstruktur beinhalten.

Wesentlich ist, dass die Ausbildung der Stützstruktur durch eine Vorverfestigung des Baumaterials erfolgt. Unter einer Vorverfestigung ist eine, insbesondere im Vergleich zu der Verfestigung des Baumaterials zur Ausbildung des eigentlich herzustellenden Objekts, geringfügige(re) Verfestigung des Baumaterials zu verstehen. Die zur Ausbildung der Stützstruktur implementierte Vorverfestigung unterscheidet sich von der zur Ausbildung eines jeweils eigentlich herzustellenden Objekts implementierten Verfestigung sonach in dem jeweils realisierten Verfestigungsgrad. Zur Ausbildung der Stützstruktur wird das Baumaterial (deutlich) weniger verfestigt - wie sich im Weiteren ergibt, erfolgt hier typischerweise kein vollständiges Aufschmelzen des Baumaterials - als zur Ausbildung des jeweiligen eigentlich herzustellenden Objekts, was z. B. durch den Einsatz unterschiedlicher, d. h. insbesondere unterschiedlich leistungsstarker, Belichtungseinrichtungen und/oder unterschiedlicher Belichtungsparameter, insbesondere durch eine geringere Belichtungsintensität, kürzere Belichtungszeit, etc., realisiert werden kann. Aus den unterschiedlichen Verfestigungsgraden ergeben sich auch unterschiedliche strukturelle, d. h. insbesondere mechanische, Eigenschaften zwischen der Stützstruktur und dem eigentlich hergestellten Objekt; typischerweise weist die Stützstruktur z. B. eine (deutlich) geringere Dichte und eine (deutlich) geringere Festigkeit als das jeweilige Objekt auf.

Dadurch, dass die Stützstruktur das jeweilige Objekt (zumindest abschnittsweise) unmittelbar umgibt respektive das jeweilige Objekt (zumindest abschnittsweise) (passgenau) in die Stützstruktur eingebettet ist, weist die Stützstruktur auch in schwer zugänglichen, z. B. hinterschnittenen, Bereichen (soweit vorhanden) des jeweiligen Objekts eine ausreichende Stützwirkung auf. Dadurch, dass die Stützstruktur durch eine Vorverfestigung des Baumaterials ausgebildet wird, lässt sich diese problemlos, d. h. insbesondere ohne Beschädigung des jeweiligen Objekts, von dem jeweiligen Objekt entfernen. Insgesamt liegt damit ein verbessertes Verfahren zur additiven Herstellung dreidimensionaler Objekte vor.

Es wurde erwähnt, dass die Vorverfestigung zur Ausbildung der Stützstruktur sich von der Verfestigung zur Ausbildung des eigentlich herzustellenden Objekts in dem jeweils realisierten Verfestigungsgrad unterscheidet. Die sukzessive schichtweise selektive Verfestigung des Baumaterials zur Ausbildung eines jeweiligen Objekts erfolgt in einem ersten Verfestigungsgrad des Baumaterials und die sukzessive schichtweise selektive Vorverfestigung des Baumaterials zur Ausbildung der Stützstruktur in einem unterhalb des ersten Verfestigungsgrads liegenden zweiten Verfestigungsgrad des Baumaterials. Der zweite Verfestigungsgrad ist typischerweise gering gewählt, sodass sich die Stützstruktur problemlos, d. h. insbesondere ohne Beschädigung des jeweiligen Objekts, von dem jeweiligen Objekt entfernen lässt. Der zweite Verfestigungsgrad wird so gering gewählt, dass die Stützstruktur während eines Auspackvorgangs des jeweiligen Objekts von selbst zerfällt.

Konkret kann die Stützstruktur zumindest abschnittsweise, insbesondere vollständig, porös, d. h. mit einer bestimmten Porosität, ausgebildet werden. Unter einer porösen Ausbildung der Stützstruktur ist im Allgemeinen jedwede feingliedrige Struktur, welche sich aufgrund ihrer feingliedrigen Gestalt ohne Beschädigung eines jeweiligen Objekts von dem jeweiligen Objekt entfernen lässt, d. h. z. B. auch eine Schwammstruktur, zu verstehen.

Die sukzessive schichtweise selektive Verfestigung des Baumaterials zur Ausbildung des Objekts kann insbesondere durch ein vollständiges Aufschmelzen (und nachfolgendes Abkühlen) des Baumaterials erfolgen. Die sukzessive schichtweise selektive Verfestigung des Baumaterials zur Ausbildung des Objekts erfolgt sonach typischerweise durch selektives Einbringen von Strahlungsenergie, welche das Baumaterial auf eine oberhalb seiner Schmelztemperatur liegende Temperatur erwärmt, sodass das Baumaterial aufgeschmolzen wird und einen Phasenübergang (fest-flüssig) vollzieht. Dagegen erfolgt die sukzessive schichtweise selektive Vorverfestigung des Baumaterials zur Ausbildung der Stützstruktur typischerweise nicht durch ein (vollständiges) Aufschmelzen (und nachfolgendes Abkühlen) des Baumaterials. Die sukzessive schichtweise selektive Vorverfestigung des Baumaterials zur Ausbildung der Stützstruktur erfolgt durch selektives Einbringen von Strahlungsenergie, welche das Baumaterial auf eine unterhalb seiner Schmelztemperatur liegende Temperatur erwärmt, sodass das Baumaterial nicht aufgeschmolzen wird und somit keinen Phasenübergang (fest-flüssig) vollzieht. Durch die schichtweise sukzessive selektive Vorverfestigung kann gegebenenfalls eine durch eine Sinterhalsbildung zwischen benachbarten Baumaterialpartikeln gebildete Sinterverbindung benachbarter Baumaterialpartikel ausgebildet werden. Das Baumaterial vollzieht dabei jedoch keinen Phasenübergang.

Um das herzustellende bzw. hergestellte Objekte, insbesondere vollständig, zu umgeben, kann die Stützstruktur mit einer das herzustellende bzw. hergestellte Objekt (vollständig) umgebenden geometrischen Gestalt ausgebildet werden. Die geometrische Gestalt der Stützstruktur ist insbesondere in Abhängigkeit der geometrischen Gestalt des herzustellenden bzw. hergestellten Objekts und des Umgebungsgrads, d. h. des Grads, inwieweit die Stützstruktur das Objekt umgeben soll, zu wählen. Entsprechend wird lediglich beispielhaft erwähnt, dass die Stützstruktur mit einer quaderartigen bzw. -förmigen, gegebenenfalls würfelartigen bzw. -förmigen, oder einer kugelartigen bzw. -förmigen geometrischen Gestalt ausgebildet werden kann. Selbstverständlich kann die Stützstruktur auch in freien, d. h. insbesondere nicht geometrisch eindeutig definierten, geometrischen Gestalten ausgebildet werden kann.

So ist es z. B. möglich, dass die Stützstruktur mit einer der Kontur, insbesondere der Außen- und/oder Innenkontur, des jeweils herzustellenden bzw. hergestellten Objekts folgenden geometrischen Gestalt ausgebildet wird. Die der Kontur des Objekts folgende geometrische Gestalt der Stützstruktur entspricht sonach - abgesehen von einem gewissen Aufmaß - im Wesentlichen der geometrischen Gestalt des jeweils herzustellenden bzw. hergestellten Objekts. Dadurch, dass die Stützstruktur mit einer der Kontur des jeweils herzustellenden bzw. hergestellten Objekts folgenden geometrischen Gestalt ausgebildet wird, kann die zur Ausbildung der Stützstruktur verwendete Menge an Baumaterial vergleichsweise klein gehalten werden.

Es wurde erwähnt, dass die sukzessive schichtweise selektive Belichtung bzw. Verfestigung jeweiliger selektiv zu verfestigender Baumaterialschichten zur Ausbildung jeweiliger Objekte auf Grundlage objektbezogener Baudaten erfolgt. Weiter wurde erwähnt, dass die sukzessive schichtweise selektive Belichtung bzw. Vorverfestigung jeweiliger selektiv zu verfestigender Baumaterialschichten zur Ausbildung der Stützstruktur auf Grundlage stützstrukturbezogener Baudaten erfolgt. Um den, insbesondere rechnerischen, Aufwand zur Erzeugung der stützstrukturbezogenen Baudaten gering zu halten, können die stützstrukturbezogenen Baudaten auf Grundlage jeweiliger objektbezogener Baudaten erzeugt werden. Derart ist gleichermaßen sichergestellt, dass die Stützstruktur bzw. die Stützwirkung jedenfalls unter Berücksichtigung der geometrischen Gestalt des jeweils zu stützenden Objekt(abschnitt)s ausgebildet wird.

Die Erfindung betrifft ferner eine Vorrichtung zur additiven Herstellung dreidimensionaler Objekte durch sukzessive schichtweise selektive Belichtung und damit einhergehende sukzessive schichtweise selektive Verfestigung von Baumaterialschichten aus einem vermittels eines Energiestrahls verfestigbaren Baumaterial. Die Vorrichtung ist als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet. Die Vorrichtung zeichnet sich dadurch aus, dass sie zur Durchführung des beschriebenen Verfahrens eingerichtet ist. Mithin gelten sämtliche Ausführungen im Zusammenhang mit dem Verfahren analog für die Vorrichtung.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung umfasst typischerweise mehrere Bestandteile, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung umfasst typischerweise mehrere Bestandteile, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Linsenelemente, Objektivelemente, etc.

Die Erfindung ist anhand von Ausführungsbeispielen in den Zeichnungsfiguren näher erläutert. Dabei zeigt:
- Fig. 1: eine Prinzipdarstellung einer Vorrichtung gemäß einem Ausführungsbeispiel; und
- Fig. 2, 3: je eine Prinzipdarstellung einer Stützstruktur gemäß einem Ausführungsbeispiel.

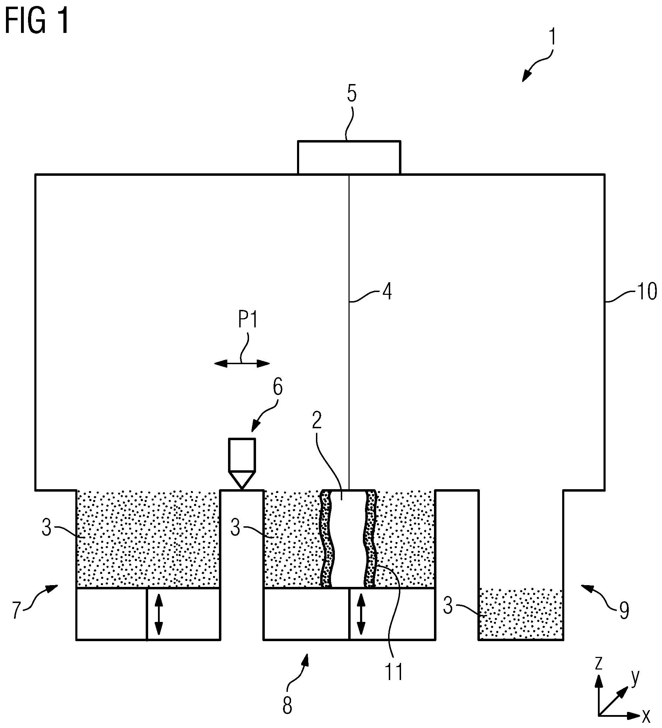

Fig. 1 zeigt eine Prinzipdarstellung einer Vorrichtung 1 gemäß einem Ausführungsbeispiel.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Energie- bzw. Laserstrahls 4. Die Vorrichtung 1 kann als Laser-CUSING^{®}-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten; in Fig. 1 ist beispielsweise eine Beschichtungseinrichtung 5 und eine Belichtungseinrichtung 6 gezeigt.

Die Beschichtungseinrichtung 5 ist zur Ausbildung selektiv zu belichtender bzw. selektiv zu verfestigender Baumaterialschichten in einer Bauebene der Vorrichtung 1 eingerichtet. Die Beschichtungseinrichtung 5 umfasst eine mehrere Beschichterelemente (nicht gezeigt) umfassende Beschichterelementbaugruppe (nicht näher bezeichnet), welche über eine Führungseinrichtung (nicht gezeigt) in, wie durch den Doppelpfeil P1 angedeutet, horizontaler Richtung bewegbar gelagert ist.

Die Belichtungseinrichtung 6 ist zur selektiven Belichtung selektiv zu verfestigender Baumaterialschichten in der Bauebene der Vorrichtung 1 eingerichtet und umfasst hierfür eine Strahlerzeugungseinrichtung (nicht gezeigt), welche zur Erzeugung eines Laserstrahls 4 eingerichtet ist, gegebenenfalls eine Strahlablenkeinrichtung (nicht gezeigt), welche zur Ablenkung eines von der Strahlerzeugungseinrichtung erzeugten Laserstrahls 4 auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc.

In Fig. 1 ist ferner ein Dosiermodul 7, ein Baumodul 8 und ein Überlaufmodul 9 dargestellt, welche an einen unteren Bereich einer intertisierbaren Prozesskammer 10 der Vorrichtung 1 angedockt sind. Die genannten Module können auch einen unteren Bereich der Prozesskammer 10 bilden.

Mit der Vorrichtung 1 lässt sich ein Verfahren zur additiven Herstellung dreidimensionaler Objekte 2 durch sukzessive schichtweise selektive Belichtung und damit einhergehende sukzessive schichtweise selektive Verfestigung von Baumaterialschichten aus einem verfestigbaren Baumaterial 3 implementieren. Die sukzessive schichtweise selektive Belichtung bzw. Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts 2 und können beispielsweise "geslicte" CAD-Daten des additiv herzustellenden Objekts 2 beinhalten. Bei dem Verfahren kann es sich um ein Laser-CUSING^{®}-Verfahren, d. h. um ein selektives Laserschmelzverfahren, handeln.

Verfahrensgemäß erfolgt im Rahmen der additiven Herstellung eines jeweiligen additiv herzustellenden Objekts 2, d. h. neben dem additiven Aufbau bzw. der additiven Ausbildung eines jeweiligen eigentlich herzustellenden Objekts 2 auch ein additiver Aufbau bzw. eine additive Ausbildung einer Stützstruktur 11. Die Stützstruktur 11 stützt das jeweilige Objekt 2 zumindest abschnittsweise, mithin übt die Stützstruktur 11 eine zumindest abschnittsweise auf das jeweilige Objekt 2 wirkende Stützwirkung aus.

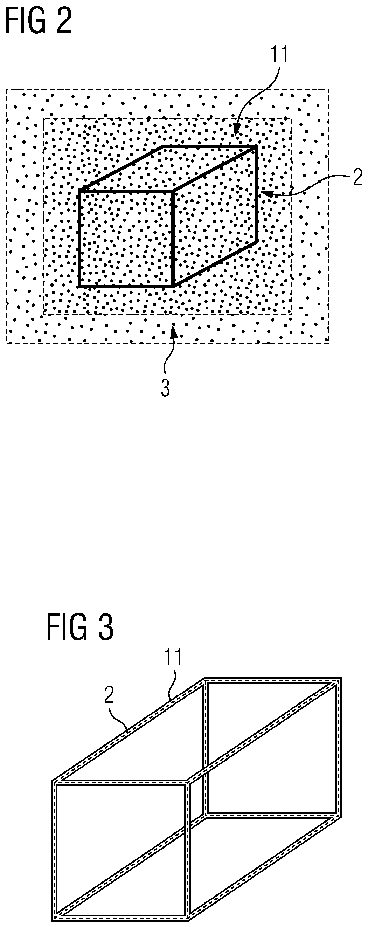

Ausführungsbeispiele einer Stützstruktur 11 sind in den Fig. 2, 3 in einer Prinzipdarstellung dargestellt. Als Objekt 2 ist in den Fig. 2, 3 beispielhaft jeweils eine filigrane würfelartige Gerüstkonstruktion, bestehend aus einzelnen entlang der Kanten eines gedachten Würfels angeordneten bzw. ausgerichteten strebenartigen Objektabschnitten, dargestellt.

Anhand der Fig. 2, 3 ist ersichtlich, dass die Stützstruktur 11 ein jeweiliges Objekt 2, d. h. einzelne, mehrere oder sämtliche Objektabschnitte des jeweiligen Objekts 2, unmittelbar umgibt. Mit anderen Worten ist das Objekt 2 (passgenau) in die Stützstruktur 11 eingebettet. Es besteht sonach ein unmittelbarer mechanischer Kontakt zwischen der Stützstruktur 11 und dem jeweiligen zu stützenden bzw. gestützten Objekt 2. Die Stützstruktur 11 kann hierfür mit mehreren zusammenhängenden oder mehreren nicht zusammenhängenden Stützstrukturabschnitten ausgebildet werden bzw. mehrere zusammenhängende oder mehrere nicht zusammenhängende Stützstrukturabschnitte umfassen. Entsprechende Stützstrukturabschnitte erstrecken sich dieses jeweils zumindest abschnittsweise umgebend jeweils zumindest abschnittsweise entlang des jeweiligen Objekts 2.

Wie erwähnt, erfolgt die Ausbildung der Stützstruktur 11 im Rahmen der additiven Herstellung des jeweiligen Objekts 2. Die Stützstruktur 11 wird verfahrensgemäß durch sukzessive schichtweise selektive Belichtung und damit einhergehende sukzessive schichtweise selektive Vorverfestigung von Baumaterialschichten aus dem vermittels des Energiestrahls 4 verfestigbaren Baumaterial 3 gebildet. Die sukzessive schichtweise selektive Belichtung bzw. Vorverfestigung jeweiliger selektiv zu verfestigender Baumaterialschichten erfolgt auf Grundlage stützstrukturbezogener Baudaten. Entsprechende Baudaten beschreiben die geometrisch-konstruktive Gestalt der jeweils additiv herzustellenden Stützstruktur und können beispielsweise "geslicte" CAD-Daten der additiv herzustellenden Stützstruktur 11 beinhalten. Um den, insbesondere rechnerischen, Aufwand zur Erzeugung der stützstrukturbezogenen Baudaten gering zu halten, können die stützstrukturbezogenen Baudaten auf Grundlage jeweiliger objektbezogener Baudaten erzeugt werden. Derart ist gleichermaßen sichergestellt, dass die Stützstruktur 11 jedenfalls unter Berücksichtigung der geometrischen Gestalt des jeweils zu stützenden Objekts 2 ausgebildet wird.

Wesentlich ist, dass die Ausbildung der Stützstruktur 11 durch eine Vorverfestigung des Baumaterials 3 erfolgt. Unter einer Vorverfestigung ist eine, insbesondere im Vergleich zu der Verfestigung des Baumaterials 3 zur Ausbildung des eigentlich herzustellenden Objekts 2, geringfügige(re) Verfestigung des Baumaterials 3 zu verstehen. Die zur Ausbildung der Stützstruktur 11 implementierte Vorverfestigung unterscheidet sich von der zur Ausbildung des eigentlich herzustellenden Objekts 2 implementierten Verfestigung sonach in dem jeweils realisierten Verfestigungsgrad. Zur Ausbildung der Stützstruktur 11 wird das Baumaterial 3 (deutlich) weniger verfestigt als zur Ausbildung des eigentlich herzustellenden Objekts 2, was z. B. durch den Einsatz unterschiedlicher Belichtungseinrichtungen und/oder unterschiedlicher Belichtungsparameter, insbesondere durch eine geringere Belichtungsintensität, kürzere Belichtungszeit, etc., realisiert wird. Aus den unterschiedlichen Verfestigungsgraden ergeben sich auch unterschiedliche strukturelle, d. h. insbesondere mechanische, Eigenschaften zwischen der Stützstruktur 11 und dem eigentlich hergestellten Objekt 2; die Stützstruktur 11 weist z. B. eine (deutlich) geringere Dichte und eine (deutlich) geringere Festigkeit als das jeweilige Objekt 2 auf.

Die sukzessive schichtweise selektive Verfestigung des Baumaterials 3 zur Ausbildung des Objekts 2 erfolgt in einem ersten Verfestigungsgrad des Baumaterials 3 und die sukzessive schichtweise selektive Vorverfestigung des Baumaterials 3 zur Ausbildung der Stützstruktur 11 in einem unterhalb des ersten Verfestigungsgrads liegenden zweiten Verfestigungsgrad des Baumaterials 3. Der zweite Verfestigungsgrad ist gering gewählt, sodass sich die Stützstruktur 11 problemlos, d. h. insbesondere ohne Beschädigung des Objekts 2, von dem Objekt 2 entfernen lässt. Der zweite Verfestigungsgrad wird so gering gewählt, dass die Stützstruktur 11 während eines Auspackvorgangs des Objekts 2 von selbst zerfällt.

Die sukzessive schichtweise selektive Verfestigung des Baumaterials 3 zur Ausbildung des Objekts 2 erfolgt durch ein vollständiges Aufschmelzen (und nachfolgendes Abkühlen) des Baumaterials 3. Die sukzessive schichtweise selektive Verfestigung des Baumaterials 3 zur Ausbildung des Objekts erfolgt sonach durch selektives Einbringen von Strahlungsenergie, welche das Baumaterial 3 auf eine oberhalb seiner Schmelztemperatur liegende Temperatur erwärmt, sodass das Baumaterial 3 aufgeschmolzen wird. Das Baumaterial 3 vollzieht dabei einen Phasenübergang. Dagegen erfolgt die sukzessive schichtweise selektive Vorverfestigung des Baumaterials 3 zur Ausbildung der Stützstruktur 11 nicht durch ein (vollständiges) Aufschmelzen (und nachfolgendes Abkühlen) des Baumaterials 3. Die sukzessive schichtweise selektive Vorverfestigung des Baumaterials 3 zur Ausbildung der Stützstruktur 11 erfolgt durch selektives Einbringen von Strahlungsenergie, welche das Baumaterial 3 auf eine unterhalb seiner Schmelztemperatur liegende Temperatur erwärmt, welche gegebenenfalls eine durch eine Sinterhalsbildung gebildete Sinterverbindung benachbarter Baumaterialpartikel erlaubt. Das Baumaterial 3 vollzieht dabei jedoch keinen Phasenübergang.

Zur Realisierung entsprechend fragiler Eigenschaften der Stützstruktur 11, kann die Stützstruktur 11 zumindest abschnittsweise, insbesondere vollständig, porös, d. h. mit einer bestimmten Porosität, ausgebildet werden. Konkret kann die Stützstruktur 11 z. B. als Schwammstruktur ("Schwammsupport") ausgebildet werden.

Dadurch, dass die Stützstruktur 11 das Objekt 2 unmittelbar umgibt respektive das Objekt 2 in die Stützstruktur 11 eingebettet ist, weist die Stützstruktur 11 auch in schwer zugänglichen, z. B. hinterschnittenen, Bereichen (soweit vorhanden) des Objekts 2 eine ausreichende Stützwirkung auf. Dadurch, dass die Stützstruktur 11 durch eine Vorverfestigung des Baumaterials 3 ausgebildet wird, lässt sich diese problemlos, d. h. insbesondere ohne Beschädigung des Objekts 2, von dem Objekt 2 entfernen.

Um das herzustellende bzw. hergestellte Objekte 2 zu umgeben, kann die Stützstruktur 11 wie in Fig. 2 gezeigt mit einer das Objekt 2 (vollständig) umgebenden geometrischen Gestalt ausgebildet werden. Die geometrische Gestalt der Stützstruktur 2 ist in Abhängigkeit der geometrischen Gestalt des Objekts 2 und des Umgebungsgrads, d. h. des Grads, inwieweit die Stützstruktur 11 das Objekt 2 umgeben soll, gewählt. In dem in Fig. 2 gezeigten Ausführungsbeispiel ist die Stützstruktur 11 mit einer quaderartigen bzw. - förmigen, gegebenenfalls würfelartigen bzw. -förmigen, ausgebildet. Ersichtlich ist das Objekt 2 innerhalb der Stützstruktur 11 angeordnet, die Stützstruktur 11 umgibt das Objekt 2 vollständig. Insbesondere ist jeder strebenartige Objektabschnitt unmittelbar von der Stützstruktur 11 umgeben.

Das gleiche Ergebnis könnte mit einer Stützstruktur 11 einer z. B. kugelartigen bzw. -förmigen geometrischen Gestalt erreicht werden. Die kugelartige bzw. - förmige geometrische Gestalt der Stützstruktur 11 wäre so bemessen, dass diese das Objekt 2 vollständig umgibt. Grundsätzlich kann die Stützstruktur 11 auch in freien, d. h. insbesondere nicht geometrisch eindeutig definierten, geometrischen Gestalten ausgebildet werden.

In dem in Fig. 3 gezeigten Ausführungsbeispiel ist gezeigt, dass die Stützstruktur 11 auch mit einer der Kontur, insbesondere der Außen- und/oder Innenkontur, des Objekts 2 folgenden geometrischen Gestalt ausgebildet sein kann. Die der Kontur des Objekts 2 folgende geometrische Gestalt der Stützstruktur 11 entspricht sonach - abgesehen von einem gewissen Aufmaß - im Wesentlichen der geometrischen Gestalt des Objekts 2. In dem in Fig. 3 gezeigten Ausführungsbeispiel weist die Stützstruktur 11 ebenso eine geometrische Gestalt einer filigranen würfelartigen Gerüstkonstruktion, bestehend aus einzelnen entlang der Kanten eines gedachten Würfels angeordneten bzw. ausgerichteten (hohl)strebenartigen Stützstrukturabschnitten, auf. Die (hohl)strebenartigen Stützstrukturabschnitte umgeben die diesen jeweils zugeordneten strebenartigen Objektabschnitte vollständig.

Dadurch, dass die Stützstruktur 11 mit einer der Kontur des Objekts 2 folgenden geometrischen Gestalt ausgebildet wird, kann die zur Ausbildung der Stützstruktur 11 verwendete Menge an Baumaterial 3 vergleichsweise klein gehalten werden.

## Patentansprüche

1. Verfahren zur additiven Herstellung eines dreidimensionalen Objekts (2) durch sukzessive schichtweise selektive Belichtung und damit einhergehende sukzessive schichtweise selektive Verfestigung von Baumaterialschichten aus einem vermittels eines Energiestrahls (4) verfestigbaren pulverförmigen Baumaterial (3) unter Verwendung eines selektiver Laserschmelzverfahrens (SLM-Verfahren) oder eines selektiven Lasersinterverfahrens (SLS-Verfahren), wobei im Rahmen der additiven Herstellung des additiv herzustellenden dreidimensionalen Objekts (2) eine das additiv herzustellende oder hergestellte dreidimensionale Objekt (2) unmittelbar umgebende Stützstruktur (11) durch sukzessive schichtweise selektive Belichtung und damit einhergehende sukzessive schichtweise selektive Vorverfestigung von Baumaterialschichten aus dem vermittels des Energiestrahls (4) verfestigbaren Baumaterial (3) gebildet wird, wobei
die sukzessive schichtweise selektive Verfestigung des Baumaterials (3) zur Ausbildung des dreidimensionalen Objekts (2) in einem ersten Verfestigungsgrad des Baumaterials (3) erfolgt und die sukzessive schichtweise selektive Vorverfestigung des Baumaterials (3) zur Ausbildung der Stützstruktur (11) in einem unterhalb des ersten Verfestigungsgrads liegenden zweiten Verfestigungsgrad des Baumaterials (3) erfolgt, wobei die sukzessive schichtweise selektive Vorverfestigung des Baumaterials (3) zur Ausbildung der Stützstruktur (11) durch selektives Einbringen von Strahlungsenergie, welche das Baumaterial (3) auf eine unterhalb seiner Schmelztemperatur liegende Temperatur erwärmt, erfolgt, **dadurch gekennzeichnet, dass**
der zweite Verfestigungsgrad des Baumaterials (3) gering gewählt wird, sodass die Stützstruktur (11) während eines Auspackvorgangs des additiv hergestellten dreidimensionalen Objekts (2) von selbst zerfällt, wobei
die Stützstruktur (11) das additiv herzustellende oder hergestellte dreidimensionale Objekt (2) vollständig umgebend ausgebildet wird.

2. Verfahren nach Anspruch 1, **dadurch gekennzeichnet, dass** die Stützstruktur (11) zumindest abschnittsweise porös ausgebildet wird.

3. Verfahren nach Anspruch 1 oder 2, **dadurch gekennzeichnet, dass** die sukzessive schichtweise selektive Verfestigung des Baumaterials (3) zur Ausbildung des dreidimensionalen Objekts (2) durch ein vollständiges Aufschmelzen und nachfolgendes Abkühlen des Baumaterials (3) erfolgt und die sukzessive schichtweise selektive Vorverfestigung des Baumaterials (3) zur Ausbildung der Stützstruktur nicht durch ein vollständiges Aufschmelzen und nachfolgendes Abkühlen des Baumaterials (3) erfolgt.

4. Verfahren nach einem der vorhergehen Ansprüche, **dadurch gekennzeichnet, dass** die Stützstruktur (11) mit mehreren zusammenhängenden oder mehreren nicht zusammenhängenden Stützstrukturabschnitten ausgebildet wird.

5. Verfahren nach einem der vorhergehenden Ansprüche, **dadurch gekennzeichnet, dass** die Stützstruktur (11) mit einer das additiv herzustellende oder hergestellte dreidimensionale Objekt (2) umgebenden quaderförmigen geometrischen Gestalt ausgebildet wird oder die Stützstruktur (11) mit einer der Kontur, insbesondere der Außen- und/oder Innenkontur, des additiv herzustellenden oder hergestellten dreidimensionalen Objekts (2) folgenden geometrischen Gestalt ausgebildet wird.

6. Verfahren nach einem der vorhergehenden Ansprüche, **dadurch gekennzeichnet, dass** die sukzessive schichtweise selektive Belichtung und die damit einhergehende sukzessive schichtweise selektive Vorverfestigung von Baumaterialschichten aus dem vermittels des Energiestrahls verfestigbaren Baumaterial (3) auf Grundlage stützstrukturbezogener Baudaten erfolgt, wobei die stützstrukturbezogenen Baudaten auf Grundlage objektbezogener Baudaten erzeugt werden.

## Claims

1. Method for the additive production of a three-dimensional object (2) by successively layer-wise selective exposure and associated successively layer-wise selective solidification of building material layers from a by means of an energy beam (4) solidifiable powder-like building material (3) using a selective laser melting method (SLM method) or a selective laser sintering method (SLS method), wherein in the context of the additive production of the additively produced three-dimensional object (2) a the additively produced or three-dimensional object (2) directly surrounding support structure (11) is formed by successively layer-wise selective exposure and associated successively layer-wise selective pre-solidification of building material layers from the by means of the energy beam (4) solidifiable building material (3), wherein
the successive layer-by-layer selective solidification of the building material (3) for the formation of the three-dimensional object (2) takes place in a first degree of solidification of the building material (3) and the successive layer-by-layer selective pre-solidification of the building material (3) for the formation of the supporting structure (11) takes place in a second degree of solidification of the building material (3) below the first degree of solidification, wherein the successive layer-by-layer selective pre-solidification of the building material (3) for the formation of the supporting structure (11) is carried out by selective introduction of radiation energy, which heats the building material (3) to a temperature below its melting temperature, **characterized in that**
the second degree of solidification of the building material (3) is chosen low, so that the support structure (11) disintegrates by itself during a unpacking process of the additively produced three-dimensional object (2), wherein
the support structure (11) the additively manufactured or manufactured three-dimensional object (2) is formed completely surrounding.

2. Method of claim 1, **characterized in that** the support structure (11) is at least partially porous.

3. Method according to claim 1 or 2, **characterized in that** the successive layer-by-layer selective solidification of the building material (3) for forming the three-dimensional object (2) by a complete melting and subsequent cooling of the building material (3) takes place and the successive layer-by-layer selective pre-solidification of the building material (3) for forming the support structure does not take place by a complete melting and subsequent cooling of the building material (3).

4. Method according to one of the preceding claims, **characterized in that** the support structure (11) is formed with several contiguous or several non-contiguous support structure sections.

5. Method according to one of the preceding claims, **characterized in that** the support structure (11) is formed with a three-dimensional object (2) surrounding the additively manufactured or three-dimensional geometric shape or the support structure (11) is formed with one of the contour, in particular the outer and / or inner contour, of the additively manufactured or three-dimensional object (2) following geometric shape.

6. Method according to one of the preceding claims, **characterized in that** the successive layer-by-layer selective exposure and the associated successive layer-by-layer selective pre-solidification of building material layers from the solidifiable by means of the energy beam building material (3) is carried out on the basis of support structure-related building data, wherein the support structure-related building data are generated on the basis of object-related building data.

## Revendications

1. Procédé de fabrication additive d'un objet tridimensionnel (2) au moyen d'une exposition sélective successive par couche et, par conséquent, d'une solidification sélective par couche successive de couches de matériaux de construction à partir d'un matériau de construction en poudre solidifiable au moyen d'un faisceau d'énergie (4) (3) au moyen d'un procédé de fusion sélective au laser (procédé SLM) ou d'un procédé de frittage sélectif au laser (procédé SLS), dans lequel, dans le cadre de la fabrication additive de l'objet tridimensionnel à fabriquer additivement (2), une structure de support directement entourant l'objet tridimensionnel à fabriquer ou à fabriquer additivement (2) est formée par une exposition sélective par couche successive et, par conséquent, une présolidification sélective par couche successive de couches de matériaux de construction à partir du matériau de construction solidifiable au moyen du faisceau d'énergie (4), dans lequel:
la solidification sélective successive par couches du matériau de construction (3) pour la formation de l'objet tridimensionnel (2) a lieu dans un premier degré de solidification du matériau de construction (3) et la solidification sélective successive par couches du matériau de construction (3) pour la formation de la structure de support (11) a lieu dans un second degré de solidification du matériau de construction (3) inférieur au premier degré de solidification, la solidification sélective successive par couches du matériau de construction (3) pour la formation de la structure de support (11) ayant lieu par apport sélectif d'énergie rayonnante qui chauffe le matériau de construction (3) à une température inférieure à sa température de fusion, **caractérisée par**:
le second degré de solidification du matériau de construction (3) est faible, de sorte que la structure de support (11) se décompose d'elle-même au cours d'un processus de déballage de l'objet tridimensionnel (2) fabriqué de manière additive, dans lequel:
la structure de support (11) est entièrement formée autour de l'objet tridimensionnel (2) à fabriquer ou à fabriquer de manière additive.

2. Procédé selon la revendication 1, **caractérisé en ce que** la structure de support (11) est formée de manière poreuse au moins par sections.

3. Procédé selon la revendication 1 ou 2, **caractérisé en ce que** la solidification sélective par couches successives du matériau de construction (3) pour former l'objet tridimensionnel (2) est réalisée par une fusion complète et un refroidissement ultérieur du matériau de construction (3) et que la présolidification sélective par couches successives du matériau de construction (3) pour former la structure de support n'est pas réalisée par une fusion complète et un refroidissement ultérieur du matériau de construction (3).

4. Procédé selon l'une quelconque des revendications précédentes, **caractérisé en ce que** la structure de support (11) est formée avec plusieurs sections de structure de support contiguës ou non contiguës.

5. Procédé selon l'une quelconque des revendications précédentes, **caractérisé en ce que** la structure de support (11) est formée avec une forme géométrique parallélépipédique entourant l'objet additif à fabriquer ou à fabriquer (2) ou **en ce que** la structure de support (11) est formée avec une forme géométrique suivant le contour, notamment le contour extérieur et/ou intérieur, de l'objet additif à fabriquer ou à fabriquer (2).

6. Procédé selon l'une quelconque des revendications précédentes, **caractérisé en ce que** l'exposition sélective par couches successives et la présolidification sélective par couches consécutives de couches de matériaux de construction à partir de matériaux de construction solidifiables au moyen du faisceau d'énergie (3) s'effectuent sur la base de données de construction relatives à la structure du support, les données de construction relatives à la structure du support étant générées sur la base de données de construction liées à l'objet.
